# EUROPÄISCHE PATENTSCHRIFT

(11) **EP 2 305 978 B1**
(45) Veröffentlichungstag und Bekanntmachung des Hinweises auf die Patenterteilung: **16.11.2016**
(21) Anmeldenummer: 09012063.5
(22) Anmeldetag: 23.09.2009
(51) Int. Cl.: F01N 3/025, F01N 3/035, F01N 3/20, F01N 9/00, F01N 13/00, F01N 3/023

(54) **Verfahren und Vorrichtung zur Regeneration eines im Abgasstrang einer Brennkraftmaschine angeordneten Partikelfilters**
Method and device for regenerating a particulate filter built into the exhaust gas flow of a combustion engine
Procédé et dispositif de régénération d'un filtre à particules agencé dans le système d'échappement d'un moteur à combustion interne

(43) Veröffentlichungstag der Anmeldung: 06.04.2011
(73) Patentinhaber: MAN Truck & Bus AG, 80995 München (DE)
(72) Erfinder: Döring, Andreas, 82008 München (DE)

(56) Entgegenhaltungen:
- EP-A2- 2 154 344
- WO-A1-2006/104240
- DE-A1- 10 043 613
- DE-A1-102007 033 424
- FR-A1- 2 924 749

## Beschreibung

Die Erfindung betrifft ein Verfahren zur Regeneration eines im Abgasstrang einer Brennkraftmaschine angeordneten Partikelfilters nach dem Oberbegriff des Anspruchs 1 sowie eine Vorrichtung zur Regeneration eines im Abgasstrang einer Brennkraftmaschine angeordneten Partikelfilters nach dem Oberbegriff des Anspruchs 6.

Insbesondere betrifft die Erfindung ein Verfahren und eine Vorrichtung zur Regeneration von Partikelfiltern bei mit Luftüberschuss betriebenen Brennkraftmaschinen, wie beispielsweise Dieselmotoren oder Benzinmotoren mit Direkteinspritzung, wie sie in Nutzfahrzeugen oder Kraftfahrzeugen zum Einsatz gelangen.

Zur Minimierung der Feinstoffpartikel werden in Fahrzeugen regelmäßig sogenannte Partikelabscheider oder Partikelfilter eingesetzt. Eine Partikelabscheider-Anordnung in Fahrzeugen ist beispielsweise aus der EP 10 727 65 A2 bekannt. Derartige Partikelabscheider unterscheiden sich von den Partikelfiltern dadurch, dass der Abgasstrom entlang der Abscheidestrukturen geführt wird, während bei Partikelfiltern das Abgas durch das Filtermedium hindurchströmen muss. In Folge dieses konstruktiven Unterschiedes neigen Partikelfilter zur Verstopfung, was den Abgasgegendruck erhöht, das heißt eine unerwünschte Druckerhöhung am Abgasausgang einer Brennkraftmaschine hervorruft, was wiederum die Motorleistung mindert und einen erhöhten Kraftstoffverbrauch der Brennkraftmaschine zur Folge hat. Ein Beispiel für eine derartige Partikelfilter-Anordnung ist aus der EP 03 418 32 A2 bekannt.

Bei beiden vorstehend beschriebenen Anordnungen oxidiert jeweils ein stromauf des Partikelabscheiders bzw. des Partikelfilters angeordneter Oxidationskatalysator das Stickstoffmonoxid (NO) im Abgas mit Hilfe des ebenfalls enthaltenen Restsauerstoffes (O₂) zu Stickstoffdioxid (NO₂), und zwar gemäß folgender Gleichung:

2 NO + O₂ <-> 2 NO₂

Das NO₂ setzt sich im Partikelfilter zur Regeneration desselben mit den kohlenstoffhaltigen Feststoffpartikeln zu CO, CO₂, N₂ und NO um. Mit Hilfe des starken Oxidationsmittels NO₂ kann somit eine kontinuierliche Entfernung der angelagerten Feinstoffpartikel erfolgen (passive Regeneration). Allerdings weist diese Vorrichtung und Verfahrensführung den Nachteil auf, dass hier eine große Menge an toxischem NO₂ im Abgastrakt gebildet bzw. vorhanden ist.

Um ein Austreten von NO₂ in die Umwelt zu vermeiden, ist daher darauf zu achten, dass der Bereich zwischen den NO-Oxidationskatalysatoren und den Partikelfiltern ausreichend dicht ausgeführt ist. Neben dem NO₂ wird bei dieser Verfahrensführung an den platinhaltigen NO-Oxidationskatalysatoren aber auch SO₃ aus im Kraftstoff- und/oder Motorenöl enthaltenem Schwefel gebildet. Dieses SO₃ und das NO₂ kondensieren an kalten Stellen im Abgastrakt zu hochkorrosiver Schwefel- bzw. Salpetersäure, so dass die Abgasanlage bis zu den Partikelfiltern in Edelstahl ausgeführt werden muss, um eine Korrosion zuverlässig zu vermeiden.

Des Weiteren ist es bekannt, eine Partikelfilterregeneration durch aktive Anhebung der Abgastemperatur durchzuführen. Hierzu beschreibt beispielsweise die DE 102 0050 552 40 A1 einen Aufbau, bei dem in einem Hauptabgasstrang in Strömungsrichtung des Abgases gesehen ein Katalysator zur Oxidation von Kohlenwasserstoffen (HC-Oxidationskatalysator), ein Dieselpartikelfilter und anschließend ein SCR-Katalysator zur Reduktion der Stickoxidemissionen angeordnet ist. Ferner ist ein Nebenabgasstrang vorgesehen, der stromauf des HC-Oxidationskatalysators vom Hauptabgasstrang abgezweigt ist und der nach dem Dieselpartikelfilter wieder in den Hauptabgasstrang einmündet. Im Nebenabgasstrang ist eine Drossel zur Regulierung des abzuzweigenden Abgasstroms, ein Oxidationskatalysator und stromab des Oxidationskatalysators ein Partikelabscheider vorgesehen. Bei einem derartigen Aufbau ist im Normalbetrieb die Drosselklappe geschlossen, so dass der gesamte Abgasstrom durch den Hauptabgasstrang strömt und in diesem gereinigt wird. Während einer Regenerationsphase des Dieselpartikelfilters des Hauptabgasstrangs wird jedoch die Drosselklappe geöffnet, um einen Teil des Abgasstroms durch den Nebenabgasstrang an dem Dieselpartikelfilter vorbei zu leiten und die Abgasströme durch den Hauptabgasstrang und den Nebenabgasstrang an einem Mischpunkt stromauf des SCR-Katalysators wieder zusammenzuführen.

Durch diese Betriebsweise wird der Abgasmassenstrom durch den Dieselpartikelfilter während dessen Regenerationsphase verringert, so dass nur die Temperatur einer geringeren Abgasmenge angehoben werden muss und der Dieselpartikelfilter mit einer geringeren Energiezufuhr regeneriert werden kann. Zusätzlich soll durch die Aufteilung des Abgasmassenstroms und die nachfolgende Mischung des eine hohe Temperatur aufweisenden Abgasstroms des Hauptabgasstrangs und des eine niedrige Temperatur aufweisenden Abgasstroms des Nebenabgasstrangs am Mischpunkt die Temperatur des Abgasstroms durch den SCR-Katalysator wiederum reduziert werden können. Durch den Partikelabscheider im Nebenabgasstrang soll zudem verhindert werden, dass ein Abgasstrom ohne Rußpartikelabscheidung aus dem Abgasstrang austreten kann.

Die Zugabe der Kohlenwasserstoffe (HC) zu den Oxidationskatalysatoren erfolgt durch eine, diesen unmittelbar vorgeschaltete Injektionsvorrichtung. Da die Oxidationskatalysatoren bei einem derartigen Aufbau auch im Nicht-Regenerationsbetrieb NO zu NO₂ oxidieren, findet auch im Nicht-Regenerationsbetrieb eine, wenngleich auch geringe passive Filterregeneration mit Hilfe von NO₂ statt. Das heißt, dass es bei einem derartigen Aufbau auch im Nicht-Regenerationsbetrieb zu einer Bildung von NO₂ kommt, das dann in der Regel unverbraucht emittiert wird. Aufgrund der Toxizität des NO₂ ist dies jedoch unpraktikabel und unerwünscht.

Ersichtlich ist ein derartiger Aufbau relativ bauteilintensiv und zudem wenig kompakt, so dass sich ein insgesamt großes Bauvolumen ergibt.

Weiter ist in der WO 2006/104240 A1 ein Verfahren und eine Anordnung zur Temperaturanhebung einer Abgasreinigungseinheit in einem Abgassystem einer Brennkraftmaschine beschrieben. Dabei ist vorgesehen, den von der Brennkraftmaschine emittierten Abgasstrom stromauf zur Abgasreinigungseinheit in einen Hauptstrom und einen Nebenstrom aufzuteilen, wobei im Hauptstrom ein Abgasventil angeordnet ist, das es erlaubt, die über den Nebenstrom geführte Abgasmenge zu steuern. Im Nebenstrom befindet sich ein Oxidationskatalysator und stromauf zur Aufteilung in Haupt- und Nebenstrom ist ein Treibstoffventil angeordnet, über das Treibstoff in das Abgas eingespritzt werden kann. Stromab zum Oxidationskatalysator werden Haupt- und Nebenstrom wieder zusammengeführt und gelangen in die Abgasreinigungseinheit. Um die Abgastemperatur und damit die Temperatur der Abgasreinigungseinheit zu erhöhen, wird durch das ganz oder teilweise Schließen des Abgasventils die über den Oxidationskatalysator geführte Abgasmenge eingestellt und gleichzeitig Treibstoff über das Treibstoffventil zugeführt, wobei dieser im Oxidationskatalysator in einer exothermen Reaktion oxidiert wird. Dadurch heizt sich das im Abgasnebenstrom geführte Abgas auf, gelangt durch die Zusammenführung in den Abgashauptstrom zurück und mit diesem in die Abgasreinigungseinheit, die dadurch ihrerseits aufgeheizt wird. Die Betätigung des Abgasventils und des Treibstoffventils und damit das Aufheizen erfolgt dabei in Abhängigkeit von der in der Abgasreinigungseinheit erforderlichen Temperatur.

Es ist daher Aufgabe der vorliegenden Erfindung, ein Verfahren und eine Vorrichtung zur Regeneration eines im Abgasstrang einer Brennkraftmaschine angeordneten Partikelfilters zur Verfügung zu stellen, mittels dem bzw. mittels der auf baulich einfache Weise eine funktionssichere und zuverlässige Partikelfilter-Regeneration, insbesondere unter Minimierung der NO₂- und/oder der SO₃-Emissionen, möglich wird.

Diese Aufgabe wird bezüglich des Verfahrens gelöst mit den Merkmalen des Anspruchs 1. Bezüglich der Vorrichtung wird diese Aufgabe gelöst mit den Merkmalen des Anspruchs 6. Vorteilhafte Ausgestaltungen hierzu sind jeweils Gegenstand der darauf rückbezogenen Unteransprüche.

Erfindungsgemäß wird vorgeschlagen, dass der dem wenigstens einen Partikelfilter zugeführte Abgasstrom ein Rohabgasstrom der Brennkraftmaschine ist, dem während eines Regenerationsbetriebes stromauf des Partikelfilters ein gegenüber diesem Rohabgasstrom eine vorgegebene höhere Temperatur aufweisender heißer Abgasstrom beigemischt wird und zwar gesteuert mittels einer eine Drossel- und/oder Absperreinrichtung entsprechend vorgegebener Regenerationsparameter ansteuernden Steuer- und/oder Regeleinrichtung. Der Rohabgasstrom wird dabei in einer Rohabgasleitung geführt, dem stromauf des Partikelfilters mittels einer weiteren Abgasleitung, die hier als Zuführleitung bezeichnet wird, der heiße Abgasstrom zugeführt wird.

Unter einem Rohabgasstrom wird dabei im Sinne der vorliegenden Erfindung insbesondere ein Abgasstrom verstanden, der stromauf des Partikelfilters keinen NO-Oxidationskatalysator durchströmt und somit ein mit Rußpartikeln beladener, im Wesentlichen NO₂-freier bzw. lediglich eine geringe Menge an NO₂ aus der Verbrennung aufweisender Abgasstrom ist.

Erfindungsgemäß wird der zu erhitzende Abgasstrom stromauf des wenigstens einen Partikelfilters an einer Abzweigstelle von dem Rohabgasstrom abgezweigt, wobei dieser abgezweigte Abgasstrom dann mittels einer Heizeinrichtung, bevorzugt mittels wenigstens eines Heizkörperkatalysators erhitzt und dem Rohabgasstrom mittels der Zuführleitung stromab der Abzweigstelle und stromauf des wenigstens einen Partikelfilters an einer Mündungsstelle als erhitzter Abgasstrom wieder zugeführt wird.

Mit einer derartigen erfindungsgemäßen Lösung lässt sich eine funktionssichere und zuverlässige Partikelfilterregeneration unter Minimierung der NO₂- und/oder der SO₃-Emissionen ohne den Einsatz von dem wenigstens einen Partikelfilter vorgeschalteten NO-Oxidationskatalysatoren bewerkstelligen. Dies geschieht insbesondere dadurch, dass die im Nichtregenerationsbetrieb über die Zuführleitung abgezweigte Abgasmenge auf einen vorgegebenen Wert minimiert wird, insbesondere auch jeglicher Abgasstrom über die Zuführleitung im Wesentlichen verhindert wird. Dadurch wird eine Bildung von NO₂ und SO₃ durch Oxidation von NO und SO₂ an der bevorzugt als HC-Oxidationskatalysator ausgebildeten Heizeinrichtung vermieden bzw. verringert.

Für die Regenerationsphase des Partikelfilters kann andererseits die über die Zuführleitung abgezweigte bzw. geleitete Abgasmenge durch Freigabe bzw. Öffnen der wenigstens einen Drossel- und/oder Absperreinrichtung auf einen vorgegebenen Mengenwert erhöht werden und können dann die Kohlenwasserstoffe dosiert zugegeben werden. In dieser Regenerationsphase ist keine Bildung von NO₂ und SO₃ zu erwarten, da einerseits deren katalytische Bildung unter der Anwesenheit von Kohlenwasserstoffen unterdrückt wird und andererseits die thermodynamischen NO/NO₂- und SO₂/SO₃-Gleichgewichte bei den während der Regeneration an der bevorzugt als HC-Oxidationskatalysator ausgebildeten Heizeinrichtung auftretenden Temperaturen von zum Beispiel über 700°C auf der Seite von NO und SO₂ liegen, das heißt, dass die Bildung von NO₂ und SO₃ dann in diesem Fall rein thermodynamisch begrenzt bzw. verhindert wird. Durch die exotherme Reaktion bzw. Oxidation der bevorzugt Kohlenwasserstoffe gelingt im Anschluss eine effektive und optimale thermische Regeneration der am nachgeschalteten Partikelfilter abgeschiedenen kohlenstoffhaltigen Rußpartikel.

Wie bereits zuvor dargelegt, wird somit bei der vorliegenden Erfindungsidee der heiße Abgasstrom bevorzugt mittels wenigstens eines Heizkatalysators erzeugt, der in der Zuführleitung angeordnet ist. Dieser Heizkatalysator ist bevorzugt als Oxidationskatalysator ausgebildet, insbesondere als HC-Oxidationskatalysator. Diesem Oxidationskatalysator werden stromauf desselben Kohlenwasserstoffe zugeführt. Bei den zugeführten Kohlenwasserstoffen handelt es sich vorzugsweise um Kraftstoff aus dem Kraftstoffsystem des Fahrzeugs, der mittels der Zudosiereinrichtung, beispielsweise über eine Düse oder dergleichen, feinstverteilt bzw. zerstäubt in die Zuführleitung stromauf des Heiz- bzw. Oxidationskatalysators zu vorgegebenen Zeiten in einer vorgegebenen Menge zugedüst wird. Ein derartiger Heiz- bzw. Oxidationskatalysator weist bevorzugt eine solche Aktivkomponente auf, die mit vorgegebenen Bestandteilen eines Abgasstroms, das heißt im vorliegenden Beispielfall mit den Kohlenwasserstoffen, durch exotherme Reaktion einen erhitzten Abgasstrom erzeugt. Besonders geeignet sind für einen HC-Oxidationskatalysator die Elemente der Platinmetallgruppe und/oder Vanadium und/oder Wolfram und/oder Cer als Aktivkomponente. Diese Aktivkomponenten können sowohl einzeln als auch in Kombination untereinander eingesetzt bzw. verwendet werden.

Konkret kann die Steuer- und/oder Regeleinrichtung eine Drossel- und/oder Absperreinrichtung ansteuern, die zum Beispiel durch wenigstens eine Drossel- und/oder Absperrklappe oder ein Drossel- und/oder Absperrventil gebildet ist. Derartige Klappen- oder Ventilelemente sind einfach und funktionssicher anzusteuern und zu bedienen, wobei diese bevorzugt im Rohabgasstrom nach der Abzweigstelle und vor der Mündungsstelle bzw. im abgezweigten Abgasstrom stromauf des Heizkatalysators angeordnet sind.

Zum Zünden der zudosierten Kohlenwasserstoffe wird der zu erhitzende Abgasstrom über die bevorzugt als HC-Oxidationskatalysator ausgebildete Heizeinrichtung geführt, wodurch der Abgasstrom erhitzt wird. Die dadurch zu erzielende Heizleistung ist allerdings durch die vorhandene Sauerstoffmenge limitiert. Denn für den Fall, dass durch die Zugabe von zu Großen Mengen an Kohlenwasserstoffen der Lambdawert den Wert 1 erreichen sollte, ist keine Oxydation der Kohlenwasserstoffe mehr möglich. Um dies zu vermeiden, wird Erfindungsgemäß, dem zu erhitzenden Abgasstrom, nach Erreichen einer bestimmten vorgegebenen Temperatur und/oder Unterschreiten bzw. Erreichen eines bestimmten vorgegebenen Lambda- bzw. Sauerstoffwerts, Frischluft zuzuführen. Diese optionale Frischluftzuführung bewirkt ein Anheben des Lambdawertes und damit auch eine Anhebung der maximal möglichen Heizleistung. Die Frischluft kann dabei generell ladeluftseitig abgezweigt werden, konkret zum Beispiel auch stromab einer Einmündung einer Abgasrückführleitung in eine Ladeluftleitung.

Durch die Zugabe von zum Beispiel Kohlenwasserstoffen bzw. in dessen Folge, durch deren Oxidation am HC-Oxidationskatalysator, kann der Restsauerstoffgehalt somit im zu erhitzenden bzw. erhitzten Abgasstrom sehr stark abnehmen, so dass gegebenenfalls keine vollständige Oxidation der Kohlenwasserstoffe mehr gelingt. Um dies zu verhindern, kann der Rohabgasstrom alternativ oder zusätzlich stromab der Abzweigstelle, aber stromauf der Mündungsstelle, zum Beispiel gedrosselt werden, wodurch dann wieder mehr Abgas und damit mehr Sauerstoff über die Zuführleitung geleitet wird. Dazu kann im Bereich der Zuführleitung stromab und/oder stromauf des Heizkatalysators wenigstens ein Sauerstoffsensor vorgesehen sein, mittels dem die Sauerstoffkonzentration im Abgasstrom erfasst werden kann. Ebenso kann dort aber auch wenigstens ein Temperatursensor vorgesehen sein.

Der Heizkatalysator kann grundsätzlich auch außerhalb des Abgasstrangs angeordnet sein, was gegebenenfalls jedoch zu einer raschen Auskühlung dieses Heizkatalysators führen kann. Gemäß einer bevorzugten Ausgestaltung ist daher vorgesehen, den Heizkatalysator so im Abgasstrang anzuordnen, dass dieser von wenigstens einem Abgasstrom, insbesondere vom Rohabgasstrom, wenigstens bereichsweise umströmt wird. In diesem Fall sind dann die über die Rohabgasleitung und die Zuführleitung geführten Abgasströme strömungstechnisch entkoppelt.

Um zum Beispiel im Falle von Kohlenwasserstoffen als Oxidationsmittel hohe Kohlenwasserstoffkonzentrationen stromab des Partikelfilters zu vermeiden, kann dieser mit einem Katalysator zur Oxidation von Kohlenwasserstoffen versehen werden. Auch ein stromab und/oder stromauf des Partikelfilters, nach der Mündungsstelle, angebrachter Katalysator mit Kohlenwasserstoffoxidationsaktivität ist denkbar. Um unnötig hohe NO₂- und SO₃-Emissionen zu vermeiden, ist die Beladung dieser zusätzlichen Katalysatoren mit Aktivkomponenten und/oder deren Volumen, im Vergleich zu dem wenigstens einen in der Zuführleitung angeordneten Heizkatalysator geringer.

Das gesamte System kann mit weiteren Katalysatoren zur NO_{X}-Reduktion, wie beispielsweise NO_{X}-Speicherkatalysatoren und/oder SCR-Katalysatoren, kombiniert werden, die bevorzugt stromab des Partikelfilters im Abgasstrang vorgesehen bzw. angeordnet sein können. Für die NO_{X}-Speicherkatalysatoren werden Platin und/oder Barium und/oder Calcium als Aktivkomponenten bevorzugt. Demgegenüber ist für die SCR-Katalysatoren der Einsatz von wolframoxidstabilisiertem Vanadiumpentoxid auf Titandioxidbasis oder Eisen-Zeolithe oder Kupfer-Zeolithe oder Kobalt-Zeolithe sinnvoll.

Grundsätzlich kann die Aktivität sämtlicher Katalysatoren durch den Einsatz von Zeolithen erhöht werden.

Grundsätzlich kann der wenigstens eine bevorzugt als HC-Oxidationskatalysator ausgebildete Heizkatalysator auch zusätzlich mit einer NO-Oxidationsaktivität versehen sein, wodurch die NO₂-Anteile im Nicht-Regenerationsbetrieb angehoben werden, so dass in vorgegebenen Grenzen zusätzlich eine grundsätzlich Regenerationsmöglichkeit des Partikelfilters mit Hilfe von NO₂ ermöglicht wird. Die hier gegebenenfalls gebildeten NO₂-Mengen sind jedoch deutlich geringer als dies beim Einsatz von dem Partikelfilter vorgeschalteten NO-Oxidationskatalysatoren der Fall wäre. Allerdings ist dann in diesem Zusammenhang weiter darauf zu achten, dass der HC-Oxidationskatalysator thermisch stabil ausgeführt sein muss. Dies hat wiederum üblicherweise eine geringere NO-Oxidationsaktivität im Vergleich zu reinen NO-Oxidationskatalysatoren zur Folge, so dass auch aus diesem Grunde die NO-Menge reduziert bleibt.

Die Erfindung wird nachfolgend anhand einer Zeichnung näher erläutert.

Es zeigen:
- Fig. 1: schematisch eine erste erfindungsgemäße Ausführungsform
- Fig. 2: schematisch eine zur Fig. 1 alternative Ausführungsform mit innerhalb des Abgasstromes angeordnetem HC-Oxidationskatalysator, und
- Fig. 3: schematisch eine vergrößerte Detailansicht des sich verzweigenden Rohrleitungsabschnittes.

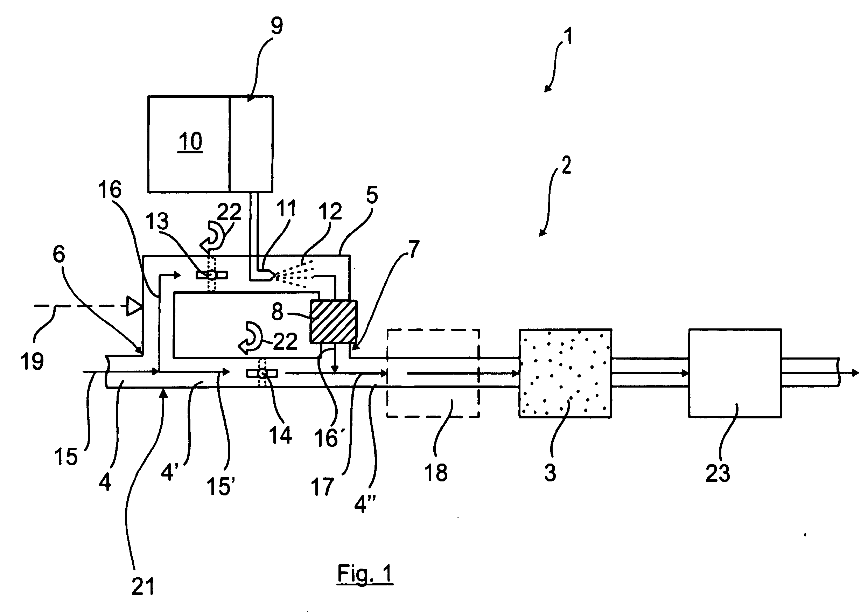

In der Fig. 1 ist schematisch und lediglich beispielhaft eine erste Ausführungsform einer erfindungsgemäßen Regenerationsvorrichtung 1 für einen im Abgasstrang 2 einer hier nicht dargestellten Brennkraftmaschine angeordneten Partikelfilter 3 gezeigt.

Konkret weist der Abgasstrang 2 hier eine Rohabgasleitung 21 mit einem ersten Leitungsabschnitt 4 auf, von dem stromauf des Partikelfilters 3 eine Zuführleitung 5 an einer Abzweigstelle 6 abzweigt, wobei diese Zuführleitung 5 ebenfalls wiederum stromauf des Partikelfilters 3 an einer Mündungsstelle 7 mit dem stromab der Abzweigstelle 6 weitergeführten Leitungsabschnitt 4' zusammengeführt wird, um den Leistungsabschnitt 4" auszubilden.

In der Zuführleitung 5 ist ein HC-Oxidationskatalysator 8 angeordnet.

Ferner umfasst die Regenerationsvorrichtung 1 eine Zudosiervorrichtung 9 für Kraftstoff, die, wie dies äußerst schematisch dargestellt ist, mit einer Steuer- und/oder Regeleinrichtung 10 gekoppelt ist. Die Zudosiervorrichtung 9 weist eine in die in der Art einer Bypassleitung ausgeführte, in die Zuführleitung 5 einragende Einspritzdüse 11 auf, über die der Kraftstoff 12 gesteuert bzw. geregelt mit der Steuer- und/oder Regeleinrichtung 10 zu vorgegebenen Zeiten in vorgegebenen Mengen in die Zuführleitung 5 stromauf des HC-Oxidationskatalysators 8 eingedüst wird.

Wie dies der Fig. 1 weiter entnommen werden kann, ist stromauf des HC-Oxidationskatalysators 8 im Bereich der Zuführleitung 5 ferner eine Drosselklappe 13 angeordnet, die bevorzugt ebenfalls mit der Steuer- und/oder Regeleinrichtung 10 gekoppelt ist. Ferner ist im Leitungsabschnitt 4' im Bereich zwischen der Abzweigstelle 6 und der Mündungsstelle 7 ebenfalls eine Drosselklappe 14 angeordnet, die bevorzugt ebenfalls mit der Steuer- und/oder Regeleinrichtung 10 gekoppelt ist.

Je nach der Stellung der beiden Drosselklappen 13, 14 kann die von einem von der Brennkraftmaschine kommenden Rohabgasstrom 15 in die Zuführleitung 5 abgezweigte Menge und Masse eines zu erhitzenden Abgasstroms 16 gesteuert vorgegeben bzw. geregelt werden. In der Fig. 1 ist mit durchgezogenen Linien die Offenstellung der Drosselklappen 13, 14 und punktiert die Geschlossenstellung der Drosselklappen 13, 14 dargestellt. Die Pfeile 22 stellen hier schematisch die variable Verstellmöglichkeit der Drosselklappen 13, 14 dar.

Der zu erhitzende Abgasstrom 16 nimmt entlang seines Strömungsweges stromauf des HC-Oxidationskatalysators 8 den eingedüsten Kraftstoff bzw. die eingedüsten Kohlenwasserstoffe auf und durchströmt kraftstoffangereichert den HC-Oxidationskatalysator 8, in dem dann eine exotherme Reaktion bzw. Oxidation stattfindet, aufgrund der der Abgasstrom 16 auf eine vorgegebene Temperatur erhitzt wird.

Dieser erhitzte Abgasstrom 16' wird dann stromab des HC-Oxidationskatalysators 8 an der Mündungsstelle 7 wieder dem über den Leitungsabschnitt 4' strömenden Rohabgasstrom 15' zugeführt, wo sich die beiden Abgasströme 15', 16' vermischen, so dass anschließend, nach dem Vermischen der beiden Abgasströme 15', 16', ein heißer Rohabgasstrom 17 zum Partikelfilter 3 strömt, wo die im Partikelfilter 3 eingelagerten kohlenstoffhaltigen Rußpartikel zu CO, CO₂, N₂ und NO umgesetzt werden, wodurch der Partikelfilter 3 regeneriert wird.

Im Nicht-Regenerationsbetrieb wird die Drosselklappe 13 so angesteuert, dass diese die Zuführleitung 5 im Wesentlichen vollständig verschließt, so dass kein bzw. nahezu kein Abgasstrom über die Zuführleitung 5 zum Partikelfilter 3 gelangt. In diesem Fall ist dann die Drosselklappe 14 vollständig geöffnet.

Im Regenerationsbetrieb dagegen ist die Drosselklappe 13 so weit geöffnet, dass eine vorgegebene Abgasmenge vom Rohabgasstrom 15 abgezweigt wird und in der bereits zuvor bereits beschriebenen Weise ein heißer Rohabgasstrom 17 erzeugt wird, der dann dem Partikelfilter 3 zu dessen Regeneration zugeführt wird.

Für den Fall, dass zum Beispiel durch die Zugabe des Kraftstoffes 12 in der Zuführleitung 5 der Restsauerstoffgehalt im Abgasstrom 16 zu stark abnehmen sollte und damit keine vollständige Oxidation der Kohlenwasserstoffe am HC-Oxidationskatalysator 8 erfolgt, kann die Drosselklappe 14 mehr oder weniger geschlossen und die Drosselklappe 13 geöffnet werden, wodurch der Rohabgasstrom 15' durch den Leitungsabschnitt 4' stark gedrosselt wird, so dass eine größere Abgasmenge 16 und damit eine größere Sauerstoffmenge über die Zuführleitung 5 und damit über den HC-Oxidationskatalysator 8 zum Partikelfilter 3 strömt.

Ebenso kann, wie durch die strichliert eingezeichnete Frischluftleitung 19 symbolisiert, während des Regenerationsbetriebes ein ladeluftseitiger Frischluftstrom in den zu erhitzenden Abgasstrom 16 eingemischt werden, um die Heizleistung zu vorgegebenen Zeiten bzw. bei Erreichen vorgegebener Abgasstromtemperaturen und/oder Unterschreiten eines vorgegebenen Lambdawerts bzw. Sauerstoffwerts durch Anheben der zur Verfügung stehenden Sauerstoffmenge nochmals weiter zu erhöhen.

Im vorliegenden Beispielfall ist dem Partikelfilter 3 zudem noch ein NO_{X}-Reduktionskatalysator 23, zum Beispiel ein SCR-Katalysator, nachgeschaltet.

Des Weiteren kann, wie dies in der Fig. 1 lediglich strichliert eingezeichnet ist, stromab der Mündungsstelle 7 und stromauf des Partikelfilters 3 auch ein weiterer HC-Oxidationskatalysator 18 vorgesehen sein, mittels dem hohe Kohlenwasserstoffkonzentrationen stromab des Partikelfilters 3 zuverlässig vermieden werden können. Alternativ oder zusätzlich hierzu ist es auch möglich, den Partikelfilter 3 selbst mit einer entsprechenden Aktivkomponente zu versehen.

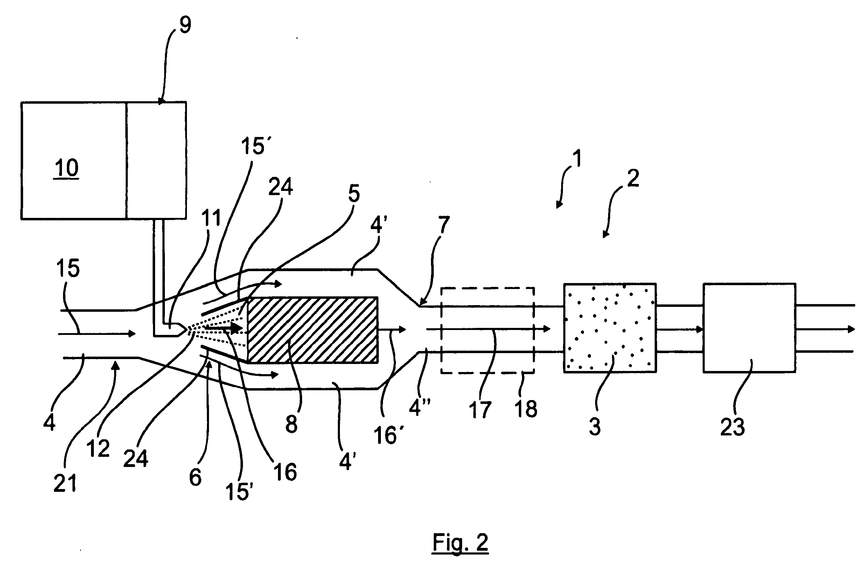

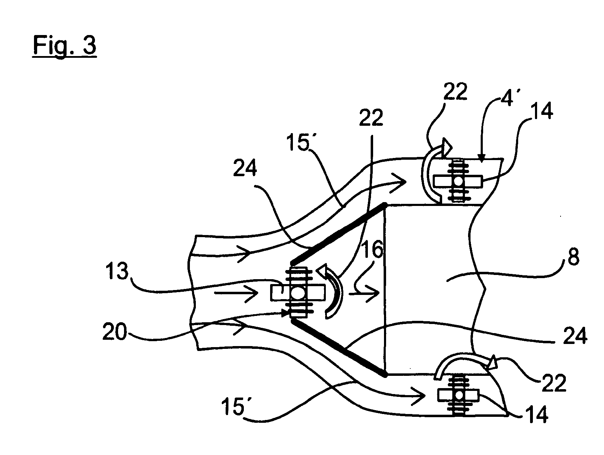

In der Fig. 2 ist schematisch und beispielhaft eine zweite Ausführungsform einer erfindungsgemäßen Regenerationsvorrichtung 1 gezeigt, bei der für eine besonders kompakte und damit platzsparende Bauweise der HC-Oxidationskatalysator 8 innerhalb eines den HC-Oxidationskatalysator 8 ringförmig umschließenden Rohabgasleitungsbereiches angeordnet und aufgenommen ist. Konkret wird der über einen ersten Leitungsabschnitt 4 der Rohabgasleitung 21 in Richtung zu dem HC-Oxidationskatalysator strömende Rohabgasstrom 15 hier durch ein oder mehrere Strömungsleitelemente 24 in einen lediglich den Leitungsabschnitt 4' der Rohabgasleitung 21 durchströmenden ersten Abgasstrom 15' sowie in einen lediglich den HC-Oxidationskatalysator 8 durchströmenden, zu erhitzenden zweiten Abgasstrom 16 aufgeteilt. Wie dies aus der Fig. 3 ersichtlich ist, kann zum Beispiel analog zur Ausführungsform nach Fig. 1 mittels einer im Bereich einer Mündungsöffnung 20 der Strömungsleitelemente 24 ausgebildeten bzw. angeordneten Drosselklappe 13 die Menge des abgezweigten, zu erhitzenden zweiten Abgasstroms 16 in der Regenerationsphase bzw. in der Nicht-Regenerationsphase gesteuert werden.

Die Masse des durch den HC-Oxidationskatalysator 8 strömenden zweiten Abgasstroms 16 wird somit durch die Geometrie der Strömungsleitelemente 24 und/oder durch die Stellung der zum Beispiel an dieser gelagerten Drosselklappe 13 vorgegeben. Die Ansteuerung der Drosselklappe 13 erfolgt wiederum über die elektronische Steuer- und/oder Regeleinrichtung 10, und zwar in Abhängigkeit von vorgegebenen Regenerations- bzw. Betriebsparametern, analog zur zuvor in Verbindung mit den Ausgestaltungen der Fig. 1 geschilderten Ansteuerung der Drosselklappe 13.

Unmittelbar vor der Mündungsöffnung 20 der Strömungsleitelemente 24 ist hier wiederum eine Einspritzdüse 11 einer Zudosiereinrichtung 9 angeordnet, mittels der Kraftstoff 12 in den zweiten Abgasstrom 14 eingedüst werden kann, so dass im HC-Oxidationskatalysator 8 eine exotherme Reaktion stattfindet und ein den HC-Oxidationskatalysator 8 verlassender heißer Abgasstrom 16' zusammen mit dem Rohabgasstrom 15' zu einem heißen Abgasstrom 17 vermischt wird. Dieser heiße Abgasstrom 17 strömt dann durch den Partikelfilter 3 sowie anschließend durch einen NOₓ-Reduktionskatalysator 23, wie dies bereits zuvor in Verbindung mit der Fig. 1 beschrieben worden ist.

Die durch die Strömungsleitelemente 24 ausgebildeten Strömungsbereiche bilden hier dann analog zu den Ausgestaltungen nach den Figuren 1 und 2 wiederum einen von dem Leitungsabschnitt 4 abzweigenden Leitungsabschnitt 4'und eine "Zuführleitung" 5 aus, die dann im Bereich stromab des HC-Oxidationskatalysators 8 wieder zu einer gemeinsamen Leitungsabschnitt 4" zusammengeführt werden.

Im Bereich der Leitungsabschnitte 4' können dann analog zur Ausgestaltung der Fig. 1 wiederum Drosselklappe(n) 14 vorgesehen sein, mittels denen die Ringraumgeometrie mehr oder weniger verschließbar ist. Die gewählte Darstellung zweier Drosselklappen 14 berücksichtigt diese Ringraumgeometrie nicht und dient nur der schematischen Darstellung.

## Patentansprüche

1. Verfahren zur Regeneration eines im Abgasstrang einer Brennkraftmaschine angeordneten Partikelfilters, insbesondere eines Dieselpartikelfilters, wobei dem wenigstens einen Partikelfilter ein zu reinigender Abgasstrom zugeführt wird und wobei der dem wenigstens einen Partikelfilter (3) zugeführte Abgasstrom ein Rohabgasstrom (15) der Brennkraftmaschine ist, dem während eines Regenrationsbetriebes, gesteuert mittels wenigstens einer eine Drossel- und/oder Absperreinrichtung (13) entsprechend vorgegebener Regenerationsparameter ansteuernden Steuer- und/oder Regeleinrichtung (10), stromauf des Partikelfilters (3) ein gegenüber dem Rohabgasstrom (15) eine vorgegebene höhere Temperatur aufweisender heißer Abgasstrom (16') beigemischt wird und der heiße Abgasstrom (16') so erzeugt wird, dass ein zu erhitzende Abgasstrom (16) stromauf des wenigstens einen Partikelfilters (3) an einer Abzweigstelle (6) von dem Rohabgasstrom (15) abgezweigt wird, wobei dieser abgezweigte Abgasstrom (16) mittels einer Heizeinrichtung, insbesondere einem Heizkatalysator (8), erwärmt und dem Rohabgasstrom (15') stromab der Abzweigstelle (6) und stromauf des wenigstens einen Partikelfilters (3) an einer Mündungsstelle (7) als erhitzter Abgasstrom (16') wieder zugeführt wird, **dadurch gekennzeichnet, dass** dem zu erhitzenden Abgasstrom (16) nach Erreichen einer vorgegebenen Aufheiztemperatur, gemessen am heißen Abgasstrom (16'), und/oder eines vorgegebenen Lambdawertes ein Frischluftstrom zugeführt wird.

2. Verfahren nach Anspruch 1, **dadurch gekennzeichnet, dass** mittels der Steuer- und/oder Regeleinrichtung (10) wenigstens eine im Rohabgasstrom (15) nach der Abzweigstelle (6) und vor der Mündungsstelle (7) und/oder im abgezweigten Abgasstrom (16) angeordnete Drossel- und/oder Absperreinrichtung (13, 14) so angesteuert wird, dass während des Regenerationsbetriebes in Abhängigkeit von vorgegebenen Betriebs- und/oder Regenerationsparametern eine vorgegebene, zu erhitzende Abgasmenge vom Rohabgasstrom (15) abgezweigt wird.

3. Verfahren nach einem der Ansprüche 1 oder 2, **dadurch gekennzeichnet, dass** die Drossel- und/oder Absperreinrichtung (13) im Nicht-Regenerationsbetrieb die Zuführung eines heißen Abgasstroms (16') zum Rohabgasstrom im Wesentlichen verhindert oder wenigstens auf einen vorgegebenen Minimalwert reduziert.

4. Verfahren nach einem der Ansprüche 1 bis 3, **dadurch gekennzeichnet, dass** der heiße Abgasstrom (16') mittels wenigstens eines Heizkatalysators (8) als Heizeinrichtung erzeugt wird, der wenigstens eine solche Aktivkomponente aufweist, die mit vorgegebenen Bestandteilen eines zu erhitzenden Abgasstroms (16) eine exotherme Reaktion und damit einen erhitzten Abgasstrom (16') erzeugt, wobei der Heizkatalysator (8) bevorzugt als Oxidationskatalysator, höchst bevorzugt als HC-Oxidationskatalysator ausgebildet ist, der von einem mit Kohlenwasserstoff (12) beladenen, zu erhitzenden Abgasstrom (16) durchströmt wird dergestalt, dass der Abgasstrom (16) durch exotherme Reaktion der Kohlenwasserstoffe (12) im Oxidationskatalysator erhitzt wird, wobei vorzugsweise die Kohlenwasserstoffe (12) dem zu erhitzenden Abgasstrom (16) stromauf des Heizkatalysators (8) zu vorgegebenen Zeiten in vorgegebenen Mengen mittels einer Zudosiervorrichtung (9) elektronisch gesteuert oder geregelt zudosiert werden.

5. Verfahren nach einem der Ansprüche 1 bis 4, **dadurch gekennzeichnet, dass** die Steuer- und/oder Regeleinrichtung (10) im Falle eines Absinkens des Sauerstoffgehaltes bzw. des Lambdawerts des abgezweigten, zu erhitzenden Abgasstromes (16) im Regenerationsbetrieb unter einen vorgegebenen Sauerstoff- bzw. Lambdagrenzwert, den Abgasstrom (15') stromab der Abzweigstelle (6) mittels wenigstens einer Drossel- und/oder Absperreinrichtung (14) so sperrt oder drosselt, dass eine, in Abhängigkeit vom Sauerstoffgehalt bzw. des Lambdawerts des Rohabgasstromes (15) und/oder in Abhängigkeit vom Sauerstoffgehalt bzw. des Lambdawerts des zu erhitzenden bzw. erhitzten Abgasstroms (16, 16') vorgegebene Abgasmenge vom Rohabgasstrom (15) abgezweigt und stromauf der Mündungsstelle (7) der wenigstens einen zur Erhitzung des abgezweigten, zu erhitzenden Abgasstromes (16) vorgesehenen Heizeinrichtung (8) zugeführt wird.

6. Vorrichtung zur Regeneration eines im Abgasstrang einer Brennkraftmaschine angeordneten Partikelfilters, insbesondere eines Dieselpartikelfilters, insbesondere zur Durchführung eines Verfahrens nach einem der vorgenannten Verfahrensansprüche, mit wenigstens einem von einem zu reinigenden Abgasstrom durchströmten Partikelfilter, wobei der dem wenigstens einen Partikelfilter (3) mittels einer Rohabgasleitung (21) zugeführte Abgasstrom ein Rohabgasstrom (15) der Brennkraftmaschine ist, dem für einen Regenerationsbetrieb stromauf des Partikelfilters (3) mittels einer weiteren, mittels wenigstens einer Drossel- und/oder Absperreinrichtung (13) in vorgegebenem Maß absperrbaren Abgasleitung als Zuführleitung (5) ein gegenüber dem Rohabgasstrom (15) eine vorgegebene höhere Temperatur aufweisender heißer Abgasstrom (16') zuführbar ist, **dadurch gekennzeichnet, dass** die Zuführleitung (5) mit einer mittels eines Absperrorgans absperrbaren Frischluftleitung (19) strömungstechnisch gekoppelt ist, mit der der Zuführleitung (5) ein ladeluftseitiger Frischluftstrom oder ein stromab der Einmündung einer Abgasrückführleitung in eine Ladeluftleitung abgezweigter Ladeluftstrom zuführbar ist.

7. Vorrichtung nach Anspruch 6, **dadurch gekennzeichnet, dass** in der Zuführleitung (5) wenigstens eine Heizeinrichtung, insbesondere wenigstens ein Heizkatalysator (8), angeordnet ist, wobei der Heizkatalysator (8) bevorzugt als Oxidationskatalysator ausgebildet ist, und vorzugsweise eine Zudosiervorrichtung (9) vorgesehen ist, mittels der dem zu erhitzenden Abgasstrom (16) stromauf des wenigstens einen Heizkatalysators (8) Kohlenwasserstoffe (12) oder dergleichen für eine exotherme Reaktion zudosierbar ist.

8. Vorrichtung nach einem der Ansprüche 6 bis 7, **dadurch gekennzeichnet, dass** die Zuführleitung (5) stromauf des wenigstens einen Partikelfilters (3) an einer Abzweigstelle (6) von der Rohabgasleitung (21) abzweigt und stromab dieser Abzweigstelle (6) und stromauf des wenigstens einen Partikelfilters (3) an einer Mündungsstelle (7) wieder in die Rohabgasleitung (21) zurückgeführt ist.

9. Vorrichtung nach Anspruch 8, **dadurch gekennzeichnet, dass** in einem Leitungsabschnitt (4') der Rohabgasleitung (21) nach der Abzweigstelle (6) und vor der Mündungsstelle (7) und/oder in der Zuführleitung (5) vor oder nach wenigstens einem Heizkatalysator (8) als Heizeinrichtung wenigstens eine mittels der Steuer- und/oder Regeleinrichtung ansteuerbare Drossel- und/oder Absperreinrichtung (13, 14) angeordnet ist, mittels dem die vom Rohabgasstrom (15) abzuzweigende Abgasmenge einstellbar ist.

10. Vorrichtung nach einem der Ansprüche 6 bis 9, **dadurch gekennzeichnet, dass** im Bereich der Zuführleitung (5) stromab und/oder stromauf des Heizkatalysators (8) ein Sauerstoffsensor zur Erfassung der O₂-Konzentration im Abgasstrom und/oder ein Temperatursensor zur Erfassung der Temperatur im Abgasstrom vorgesehen ist.

11. Vorrichtung nach einem der Ansprüche 8 bis 10, **dadurch gekennzeichnet, dass** stromab der Mündungsstelle (7) und stromauf und/oder stromab des Partikelfilters (3) wenigstens ein Oxidationskatalysator (18), insbesondere ein Oxidationskatalysator zur Oxidation von Kohlenwasserstoffen in der Rohabgasleitung (4) angeordnet ist, wobei bevorzugt vorgesehen ist, dass der stromab der Mündungsstelle (7) angeordnete, wenigstens eine Oxidationskatalysator (18) als HC-Oxidationskatalysator ausgebildet ist, der einen niedrigeren Gehalt an Kohlenwasserstoffe oxidierender Aktivkomponente(n) und/oder ein geringeres Volumen aufweist als ein ebenfalls als HC-Oxidationskatalysator ausgebildeter Heizkatalsysator in der Zuführleitung (5).

12. Vorrichtung nach einem der Ansprüche 6 bis 11, **dadurch gekennzeichnet, dass** der wenigstens einen Partikelfilter (3) zusätzlich mit einer HC-Oxidationsaktivität versehen ist, und/oder dass der wenigstens eine Heizkatalysator zusätzlich mit einer NO-Oxidationsaktivität versehen ist, und/oder dass im Abgasstrang (2), insbesondere stromab des wenigstens einen Partikelfilters, ein NO_{X}-Reduktionskatalysator (17), insbesondere wenigstens ein NO_{X}-Speicherkatalysator und/oder wenigstens ein SCR-Katalysator, angeordnet ist.

## Claims

1. A method for regenerating a particle filter, in particular a diesel particle filter, arranged in the exhaust train of an internal combustion engine, wherein a flow of exhaust gas which is to be cleaned is fed to the at least one particle filter, and the exhaust gas flow fed to the at least one particle filter (3) is a raw exhaust gas flow (15) of the internal combustion engine, to which, during a regeneration operation, a hot exhaust gas flow (16') having a predefined relatively high temperature compared to the raw exhaust gas flow (15) is added upstream of the particle filter (3), under the control of at least one open-loop and/or closed-loop control device (10) which actuates a throttle device and/or shut-off device (13) in accordance with predefined regeneration parameters, and the hot exhaust gas flow (16') is generated in such a way that an exhaust gas flow (16) to be heated is branched off from the raw exhaust gas flow (15) upstream of the at least one particle filter (3) at a branching point (16), wherein this branched-off exhaust gas flow (16) is heated by means of a heating device, in particular a heating catalytic converter (8), and is fed back as a heated exhaust gas flow (16') to the raw exhaust gas flow (15') downstream of the branching point (6) and upstream of the at least one particle filter (3), at a junction point (7), **characterized in that** after a predefined heating temperature has been reached, measured at the hot exhaust gas flow (16') and/or a predefined lambda value has been reached, a fresh air flow is fed to the exhaust gas flow (16) which is to be heated.

2. The method according to Claim 1, **characterized in that** at least one throttle device and/or shut-off device (13, 14) which is arranged in the raw exhaust gas flow (15) downstream of the branching point (6) and upstream of the junction point (7) and/or in the branched-off exhaust gas flow (16) is actuated by means of the open-loop and/or closed-loop control device in such a way that during the regeneration operation a predefined quantity of exhaust gas which is to be heated is branched off from the raw exhaust gas flow (15) as a function of predefined operating and/or regeneration parameters.

3. The method according to one of Claims 1 or 2, **characterized in that** in the non-regeneration operation the throttle device and/or shut-off device (13) essentially prevents the feeding of a hot exhaust gas flow (16') to the raw exhaust gas flow or at least reduces it to a predefined minimum value.

4. The method according to one of Claims 1 to 3, **characterized in that** the hot exhaust gas flow (16') is generated by means of at least one heating catalytic converter (8) as a heating device which has at least one such active component which generates an exothermal reaction and therefore a heated exhaust gas flow (16') with predefined components of an exhaust gas flow (16) which is to be heated, wherein the heating catalytic converter (8) is preferably embodied as an oxidation catalytic converter, most preferably as an HC oxidation catalytic converter through which an exhaust gas flow (16) which is to be heated and which is loaded with hydrocarbon (12) flows, in such a way that the exhaust gas flow (16) is heated by an exothermal reaction of the hydrocarbons (12) in the oxidation catalytic converter, wherein the hydrocarbons (12) are preferably metered in an electronically open-loop or closed-loop controlled fashion to the exhaust gas flow (16), to be heated upstream of the heating catalytic converter (8) at predefined times in predefined amounts by means of a metering device (9).

5. The method according to one of Claims 1 to 4, **characterized in that** in the event of the oxygen content or the lambda value of the branched-off exhaust gas flow (16) which is to be heated dropping below a predefined oxygen limiting value or lambda limiting value in the regeneration operation, the open-loop and/or closed-loop control device (10) shuts off or throttles the exhaust gas flow (15') downstream of the branching point (6) by means of at least one throttling device and/or shut-off device (14) in such a way that a quantity of exhaust gas which is predefined as a function of the oxygen content or of the lambda value of the raw exhaust gas flow (15) and/or a function of the oxygen content or of the lambda value of the exhaust gas flow (16, 16') which is to heated or is heated is branched off from the raw exhaust gas flow (15) and fed, upstream of the junction point (7), to the at least one heating device (9) which is provided for heating the branched-off exhaust gas flow (16) which is to be heated.

6. A device for regenerating a particle filter, in particular a diesel particle filter, which is arranged in the exhaust gas train of an internal combustion engine, in particular for carrying out a method according to one of the preceding method claims, having at least one particle filter through which an exhaust gas flow to be cleaned flows, wherein the exhaust gas flow which is fed to the at least one particle filter (3) by means of a raw exhaust gas line (21) is a raw exhaust gas flow (15) of the internal combustion engine, to which, for a regeneration operation, a hot exhaust gas flow (16') which has a predefined relatively high temperature than the raw exhaust gas flow (15) can be fed upstream of the particle filter (3) by means of a further exhaust gas line, as a feed line (5), which can be shut off to a predefined degree by means of at least one throttle device and/or shut-off device (13), **characterized in that** the feed line (5) is coupled fluidically to a fresh air line (19) which can be shut off by means of a shut-off element and with which a charge-air-side fresh air flow or a charge air flow branched off downstream of the junction of an exhaust gas feedback line into a charge air line can be fed to the feed line (5).

7. The device according to Claim 6, **characterized in that** at least one heating device, in particular at least one heating catalytic converter (8) is arranged in the feed line (5), wherein the heating catalytic converter (8) is preferably embodied as an oxidation catalytic converter, and preferably a metering device (9) is provided by means of which hydrocarbons (12) or the like for an exothermal reaction can be metered to the exhaust gas flow (16) to be heated, upstream of the at least one heating catalytic converter (8).

8. The device according to one of Claims 6 to 7, **characterized in that** the feed line (5) branches off from the raw exhaust gas line (21) upstream of the at least one particle filter (3) at a branch point (6), and is fed back into the raw exhaust gas line (21) again downstream of this branching point (6) and upstream of the at least one particle filter (3), at a junction point (7).

9. The device according to Claim 8, **characterized in that** in a line section (4') of the raw exhaust gas line (21) downstream of the branching point (6) and upstream of the junction point (7) and/or in the feed line (5) upstream or downstream of at least one heating catalytic converter (8) as a heating device at least one throttle device and/or shut-off device (13, 14) which can be actuated by means of the open-loop and/or closed-loop control device is arranged, by means of which the quantity of exhaust gas which branches off from the raw exhaust gas flow (15) can be adjusted.

10. The device according to one of Claims 6 to 9, **characterized in that** in the region of the feed line (5) downstream and/or upstream of the heating catalytic converter (8) an oxygen sensor is provided for detecting the O₂ concentration in the exhaust gas flow, and/or a temperature sensor is provided for detecting the temperature in the exhaust gas flow.

11. The device according to one of Claims 8 to 10, **characterized in that** at least one oxidation catalytic converter (18), in particular an oxidation catalytic converter for oxidizing hydrocarbons in the raw exhaust gas line (4) is arranged downstream of the junction point (7) and upstream and/or downstream of the particle filter (3), wherein there is preferably provision that the at least one oxidation catalytic converter (18) which is arranged downstream of the junction point (7) is embodied as an HC oxidation catalytic converter which has a lower content of active component/components which oxidizes/oxidize hydrocarbons and/or a smaller volume than a heating catalytic converter, also embodied as a HC oxidation catalytic converter, in the feed line (5).

12. The device according to one of Claims 6 to 11, **characterized in that** the at least one particle filter (3) is additionally provided with an HC oxidation activity, and/or **in that** the at least one heating catalytic converter is additionally provided with an NO oxidation activity, and/or **in that** an NOₓ reduction catalytic converter (17), in particular at least one NOₓ storage-type catalytic converter and/or at least one SCR catalytic converter, are/is arranged in the exhaust train (2), in particular downstream of the at least one particle filter.

## Revendications

1. Procédé de régénération d'un filtre à particules, notamment un filtre à particules diesel, disposé dans la ligne des gaz d'échappement d'un moteur à combustion interne, un courant de gaz d'échappement à purifier étant acheminé à l'au moins un filtre à particules et le courant de gaz d'échappement acheminé à l'au moins un filtre à particules (3) étant un courant de gaz d'échappement bruts (15) du moteur à combustion interne auquel un courant de gaz d'échappement chaud (16'), qui possède une température plus élevée prédéfinie par rapport au courant de gaz d'échappement bruts (15), est mélangé en amont du filtre à particules (3) pendant un régime de régénération en étant commandé au moyen d'au moins un dispositif de commande et/ou de régulation (10) qui commande un dispositif d'étranglement et/ou de fermeture (13) conformément à des paramètres de régénération prédéfinis, et le courant de gaz d'échappement chaud (16') étant généré de telle sorte qu'un courant de gaz d'échappement (16) à chauffer est dérivé du courant de gaz d'échappement bruts (15) en amont de l'au moins un filtre à particules (3) à un point de dérivation (6), ce courant de gaz d'échappement (16) dérivé étant chauffé au moyen d'un dispositif de chauffage, notamment un catalyseur chauffant (8), et étant de nouveau acheminé au courant de gaz d'échappement bruts (15') en aval du point de dérivation (6) et en amont de l'au moins un filtre à particules (3) à un point de débouché (7) en tant que courant de gaz d'échappement chauffé (16'), **caractérisé en ce qu'**un courant d'air frais est acheminé au courant de gaz d'échappement à (16) chauffer après avoir atteint une température d'échauffement prédéfinie, mesurée sur le courant de gaz d'échappement (16') chauffé, et/ou une valeur lambda prédéfinie.

2. Procédé selon la revendication 1, **caractérisé en ce qu'**au moins un dispositif d'étranglement et/ou de fermeture (13, 14), disposé dans le courant de gaz d'échappement bruts (15) après le point de dérivation (6) et avant le point de débouché (7) et/ou dans le courant de gaz d'échappement (16) dérivé est commandé au moyen du dispositif de commande et/ou de régulation (10) de telle sorte qu'une quantité de gaz d'échappement prédéfinie à chauffer est dérivée du courant de gaz d'échappement bruts (15) pendant le régime de régénération en fonction de paramètres de fonctionnement et/ou de régénération prédéfinis.

3. Procédé selon la revendication 1 ou 2, **caractérisé en ce qu'**en-dehors du régime de régénération, le dispositif d'étranglement et/ou de fermeture (13) empêche sensiblement ou réduit au moins à une valeur minimale prédéfinie l'acheminement d'un courant de gaz d'échappement (16') chaud au courant de gaz d'échappement bruts.

4. Procédé selon l'une des revendications 1 à 3, **caractérisé en ce que** le courant de gaz d'échappement chaud (16') est généré au moyen d'au moins un catalyseur chauffant (8) faisant office de dispositif de chauffage, lequel possède au moins une composante active qui, avec des éléments constitutifs prédéfinis d'un courant de gaz d'échappement (16) à chauffer, produit une réaction exotherme et génère ainsi un courant de gaz d'échappement (16') chauffé, le catalyseur chauffant (8) étant de préférence réalisé sous la forme d'un catalyseur d'oxydation, très préférablement sous la forme d'un catalyseur d'oxydation des hydrocarbures imbrulés qui est traversé par un courant de gaz d'échappement (16) à chauffer, chargé d'hydrocarbures (12), de telle sorte que le courant de gaz d'échappement (16) est chauffé par la réaction exotherme des hydrocarbures (12) dans le catalyseur d'oxydation, les hydrocarbures (12) étant de préférence ajoutés de manière dosée au courant de gaz d'échappement (16) à chauffer en amont du catalyseur chauffant (8) à des instants prédéfinis dans des quantités prédéfinies au moyen d'un dispositif de dosage (9) à commande ou régulation électronique.

5. Procédé selon l'une des revendications 1 à 4, **caractérisé en ce que** le dispositif de commande et/ou de régulation (10), dans le cas d'une diminution de la teneur en oxygène ou de la valeur lambda du courant de gaz d'échappement (16) dérivé à chauffer en régime de régénération au-dessous d'une valeur limite d'oxygène ou Lambda prédéfinie, bloque ou étrangle le courant de gaz d'échappement (15') en amont du point de dérivation (6) au moyen d'au moins un dispositif d'étranglement et/ou de fermeture (14) de telle sorte qu'une quantité de gaz d'échappement prédéfinie en fonction de la teneur en oxygène ou de la valeur lambda du courant de gaz d'échappement bruts (15) et/ou en fonction de la teneur en oxygène ou de la valeur lambda du courant de gaz d'échappement (16, 16') à chauffer ou chauffé est dérivée du courant de gaz d'échappement bruts (15) et acheminée en amont du point de débouché (7) de l'au moins un dispositif de chauffage (8) conçu pour le chauffage du courant de gaz d'échappement (16) à chauffer dérivé.

6. Dispositif de régénération d'un filtre à particules, notamment un filtre à particules diesel, disposé dans la ligne des gaz d'échappement d'un moteur à combustion interne, notamment destiné à mettre en oeuvre un procédé selon l'une des revendications précédentes, comprenant au moins un filtre à particules traversé par un courant de gaz d'échappement à purifier, le courant de gaz d'échappement acheminé à l'au moins un filtre à particules (3) au moyen d'une conduite de gaz d'échappement bruts (21) étant un courant de gaz d'échappement bruts (15) du moteur à combustion interne auquel peut être acheminé un courant de gaz d'échappement (16') chaud, qui possède une température plus élevée prédéfinie par rapport au courant de gaz d'échappement bruts (15), pour un régime de régénération en amont du filtre à particules (3) au moyen d'une conduite de gaz d'échappement supplémentaire faisant office de conduite d'arrivée (5), laquelle peut être fermée à un niveau prédéfini au moyen d'au moins un dispositif d'étranglement et/ou de fermeture (13), **caractérisé en ce que** la conduite d'arrivée (5) est connectée de manière fluidique à une conduite à air frais (19) qui peut être fermée au moyen d'un organe de fermeture, avec laquelle un courant d'air frais côté air de suralimentation ou un courant d'air de suralimentation dérivé en aval du débouché d'une conduite de retour des gaz d'échappement dans une conduite à air de suralimentation peut être acheminé à la conduite d'arrivée (5).

7. Dispositif selon la revendication 6, **caractérisé en ce qu'**au moins un dispositif de chauffage, notamment au moins un catalyseur chauffant (8) est disposé dans la conduite d'arrivée (5), le catalyseur chauffant (8) étant réalisé de préférence sous la forme d'un catalyseur d'oxydation, et un dispositif de dosage (9) étant de préférence présent, au moyen duquel des hydrocarbures (12) ou similaires peuvent être ajoutés de manière dosée au courant de gaz d'échappement (16) à chauffer an amont de l'au moins un catalyseur chauffant (8) pour une réaction exotherme.

8. Dispositif selon l'une des revendications 6 à 7, **caractérisé en ce que** la conduite d'arrivée (5) est dérivée de la conduite de gaz d'échappement bruts (21) en amont de l'au moins un filtre à particules (3) à un point de dérivation (6) et est de nouveau ramenée dans la conduite de gaz d'échappement bruts (21) à un point de débouché (7) en aval de ce point de dérivation (6) et en amont de l'au moins un filtre à particules (3).

9. Dispositif selon la revendication 8, **caractérisé en ce qu'**au moins un dispositif d'étranglement et/ou de fermeture (13, 14) pouvant être commandé au moyen du dispositif de commande et/ou de régulation est disposé dans une portion de conduite (4') de la conduite de gaz d'échappement bruts (21) après le point de dérivation (6) et avant le point de débouché (7) et/ou dans la conduite d'arrivée (5) avant ou après au moins un catalyseur chauffant (8) faisant office de dispositif de chauffage, au moyen duquel la quantité de gaz d'échappement à dériver du courant de gaz d'échappement bruts (15) est réglable.

10. Dispositif selon l'une des revendications 6 à 9, **caractérisé en ce qu'**un détecteur d'oxygène destiné à détecter la concentration d'O₂ dans le courant de gaz d'échappement et/ou une sonde de température destinée à détecter la température dans le courant de gaz d'échappement se trouvent dans la zone de la conduite d'arrivée (5) en aval et/ou en amont du catalyseur chauffant (8).

11. Dispositif selon l'une des revendications 8 à 10, **caractérisé en ce qu'**au moins un catalyseur d'oxydation (18), notamment un catalyseur d'oxydation servant à l'oxydation des hydrocarbures est disposé dans la conduite de gaz d'échappement bruts (4) en aval du point de débouché (7) et en amont et/ou en aval du filtre à particules (3), l'au moins un catalyseur d'oxydation (18) disposé en aval du point de débouché (7) étant de préférence réalisé sous la forme d'un catalyseur d'oxydation des hydrocarbures imbrulés qui possède une teneur plus faible en composante(s) active(s) oxydant les hydrocarbures et/ou un volume plus faible qu'un catalyseur chauffant, lui aussi réalisé sous la forme d'un catalyseur d'oxydation des hydrocarbures imbrulés, dans la conduite d'arrivée (5).

12. Dispositif selon l'une des revendications 6 à 11, **caractérisé en ce que** l'au moins un filtre à particules (3) est en outre doté d'une activité d'oxydation des hydrocarbures imbrulés, et/ou **en ce que** l'au moins un catalyseur chauffant est en outre doté d'une activité d'oxydation des hydrocarbures imbrulés, et/ou **en ce qu'**un catalyseur de réduction des NOx (17), notamment au moins un catalyseur à accumulation de NOx et/ou au moins un catalyseur à RCS, est disposé dans la ligne des gaz d'échappement (2), notamment en aval de l'au moins un filtre à particules.
